(19) Europäisches Patentamt / European Patent Office / Office européen des brevets

(11) **EP 0 778 678 B1**

(12) **FASCICULE DE BREVET EUROPEEN**

(45) Date de publication et mention
de la délivrance du brevet:
**01.08.2007 Bulletin 2007/31**

(51) Int Cl.:
***H04B 1/707*** *(2006.01)* ***H04K 3/00*** *(2006.01)*

(21) Numéro de dépôt: **96402642.1**

(22) Date de dépôt: **05.12.1996**

(54) **Récepteur différentiel de signaux à étalement de spectre par séquence directe**

Differentialempfänger für Direktsequenzspreizspektrumsignale

Differential receiver for direct sequence spread spectrum signals

(84) Etats contractants désignés:
**CH DE GB IT LI**

(30) Priorité: **07.12.1995 FR 9514475**

(43) Date de publication de la demande:
**11.06.1997 Bulletin 1997/24**

(73) Titulaire: **Commissariat à l'Energie Atomique
75015 Paris (FR)**

(72) Inventeurs:
• **Piaget, Bernard
38610 Venon (FR)**
• **Fort, Charles
38470 Vatilieu (FR)**

• **Le Masson, Patrick
38250 Villard de Lans (FR)**

(74) Mandataire: **Viering, Jentschura & Partner
Postfach 22 14 43
80504 München (DE)**

(56) Documents cités:
**EP-A- 0 580 243          FR-A- 2 696 298
US-A- 4 247 939**

• **PATENT ABSTRACTS OF JAPAN vol. 95, no. 003
& JP 07 079176 A (MITSUBISHI ELECTRIC CORP),
20 Mars 1995,**

EP 0 778 678 B1

## Description

### Domaine technique

La présente invention a pour objet un récepteur différentiel de signaux à étalement de spectre par séquence directe.

### Etat de la technique

La technique de l'étalement de spectre est utilisée depuis de nombreuses années dans les radiocommunications militaires, essentiellement parce qu'elle permet d'établir des liaisons discrètes, d'interception difficile et résistantes aux brouillages. Deux techniques d'étalement sont utilisées de manière classique : l'étalement de spectre par saut de fréquence et l'étalement de spectre par séquence directe.

L'étalement de spectre par saut de fréquence (appelé également "évasion de fréquence") est la technique employée pour les applications militaires. Elle consiste à changer la fréquence porteuse radio le plus souvent possible (jusqu'à plusieurs centaines de fois par seconde) selon une loi qui n'est connue que des récepteurs amis. Cette loi, qui est gérée par une ou plusieurs séquences pseudoaléatoires, constitue le code d'accès à la liaison.

Cette technique nécessite l'emploi de synthétiseurs de fréquence agiles. Elle est donc onéreuse et il n'existe que peu d'applications dans le domaine civil.

L'autre technique, à étalement de spectre par séquence directe (ou, en abrégé, ESSD ou "Direct Sequence Spread Spectrum" (DSSS) en terminologie anglo-saxonne), consiste à transformer le signal à émettre, dont la bande spectrale est $B_S$, en un signal ayant les propriétés d'un bruit blanc, dont la bande spectrale est beaucoup plus importante $B_{ES}$. Cette opération d'étalement est réalisée en multipliant le message à transmettre par une séquence pseudoaléatoire formée de bits pouvant prendre les valeurs +1 ou -1. Si T est la période des éléments d'information à transmettre, et $T_C$ la durée d'un élément binaire de la séquence pseudoaléatoire (appelé également "chip"), on peut définir une grandeur fondamentale de la modulation à étalement du spectre, à savoir le gain de traitement N, par la relation :

$$N = (T/T_C) = (B_{ES}/B_S).$$

Ce gain de traitement peut varier suivant les cas de 10 à plusieurs dizaines de milliers, les valeurs classiques en radiocommunications ne dépassant jamais 1000.

Pour pouvoir retrouver l'information, le récepteur doit réaliser une opération de corrélation entre le message reçu et une séquence pseudoaléatoire identique à celle qui a été utilisée pour réaliser l'opération d'étalement. Le récepteur doit donc connaître cette séquence, laquelle constitue la clé d'accès au message émis. Deux messages indépendants peuvent être transmis en utilisant la même bande de fréquence et deux séquences orthogonales, c'est-à-dire deux séquences ayant des coefficients d'intercorrélation faibles.

Les avantages de la technique à étalement de spectre par séquence directe les plus fréquemment mis en avant sont les suivants :

- la même bande de fréquence peut être partagée par les systèmes utilisant une modulation à bande étroite et ceux qui utilisent l'étalement de spectre ; les premiers ne constateront qu'une légère augmentation du bruit radioélectrique ambiant puisque les séquences d'étalement ont les caractéristiques spectrales d'un bruit alors que les seconds opèreront une réjection des modulations à bande étroite grâce à l'opération de corrélation ;

- plusieurs liaisons à étalement de spectre peuvent partager la même bande de fréquence par utilisation de séquences pseudoaléatoires orthogonales ; cette technique (qui porte le nom d'accès multiple à répartition par les codes ou AMRC en abrégé ou CDMA en anglais) est malheureusement difficile à mettre en oeuvre et impose une gestion de la puissance émise ;

- une transmission à étalement de spectre est difficile à intercepter puisque le récepteur doit connaître la séquence d'étalement pour pouvoir démoduler les données correctement ; en fait, souvent, une connaissance partielle de la séquence suffit ;

- une transmission à étalement de spectre est assez résistante vis-à-vis des brouilleurs et interférences et ceci d'autant plus que le gain de traitement est grand. En fait, il faut tempérer quelque peu cet avantage car, par rapport à une liaison à bande étroite et dans le cas d'une application civile où il ne faut prendre en compte que les interférences et ne pas considérer le cas des brouilleurs mal intentionnés ; en effet, en multipliant la bande par N, on intercepte une puissance de bruit due aux interférences N fois plus forte en moyenne que l'on réjecte avec un gain de traitement égal à N d'où une résistance vis-à-vis de ces interférences pas plus importante que pour les techniques classiques.

Mise à part une meilleure gestion du spectre radioélectrique (puisque cette technique permet de partager les mêmes bandes de fréquence que certaines émissions à bandes étroites), l'étalement de spectre par séquence directe ne paraît pas avoir beaucoup d'atouts. L'intérêt primordial de cette technique apparaît lorsqu'on analyse le comportement de cette modulation dans les canaux radio en présence de trajets multiples.

La technique de l'étalement de spectre par séquence directe trouve des applications dans les transmissions radioélectriques avec les véhicules automobiles, dans les réseaux locaux informatiques d'entreprise sans fil, les transmissions de données en milieu industriel et, plus généralement dans toutes les transmissions radio à l'intérieur des bâtiments.

Dans ce type d'environnement, la propagation de l'onde radioélectrique s'effectue selon des trajets multiples mettant en jeu des phénomènes de réflexion (sur les murs et cloisons), de diffraction (sur les arêtes) et de diffusion. De plus, dans le cas général, il n'y a pas de trajet direct entre l'émetteur et le récepteur.

Cette propagation par trajets multiples induit un certain nombre d'effets parasites qui détériorent la qualité de la transmission jusqu'à la rendre quelquefois inexploitable. Outre l'atténuation importante du signal radio lors de sa propagation puisqu'il doit traverser des cloisons), les autres effets gênants sont :

a) L'élargissement de la réponse impulsionnelle du canal. Cet effet est lié au fait que tous les trajets possèdent des durées de propagation différentes, ce qui impose une valeur limite du débit d'informations dans le canal. La durée du symbole transmis doit être beaucoup plus élevée que cette largeur de réponse impulsionnelle pour obtenir un taux d'erreur raisonnable.

b) Les évanouissements ou "fading", qui ont pour origine une sommation vectorielle destructive du signal sur l'antenne de réception. Le niveau du signal reçu subit donc des fluctuations importantes lors du déplacement de l'antenne de réception. Ces fluctuations existent même avec des antennes fixes. Elles sont, dans ce cas, engendrées par les mouvements de véhicules ou de personnel dans le trajet radio. Ces évanouissements détériorent bien entendu la qualité de la transmission. Les techniques employées de manière classique pour améliorer cette qualité sont des techniques dites de diversité, qui consistent à utiliser plusieurs antennes de réception. L'augmentation du coût induit par l'adoption de ces techniques fait qu'elles sont utilisées essentiellement dans les systèmes militaires.

c) Le bruit Doppler ou modulation parasite de fréquence. Cet effet est d'autant plus gênant que le débit de données est faible. Il ne s'agit pas d'un décalage en fréquence mais bien d'un bruit, puisque les directions d'arrivée des différents trajets radio sont quelconques. Ce phénomène est d'autant plus fort que la fréquence radio et la vitesse des véhicules sont élevées.

Dans ce type de canal radio, la technique à étalement de spectre par séquence directe à modulation différentielle de phase permet d'assurer une bonne qualité de transmission, sous réserve de respecter quelques règles qui fixent les paramètres de modulation.

Ces techniques de transmission sont décrites dans de nombreux ouvrages et articles. On peut citer, par exemple, l'ouvrage intitulé "Spread Spectrum Communications" par Marvin K. SIMON et al., Computer Science Press, 1983, vol. I et les articles suivants :

- "Design and experimental results for a direct-sequence spread-spectrum radio using differential phase shift keying modulation for indoor wireless communications", par M. KAVEHRAD et al., publié dans IEEE Journal on SAC, vol. SAC 5, n°5, juin 1987, pp. 815-823,

- "Performance of differentially coherent digital communications over frequency-selective fading channels", par F.D. GARBER et al., publié dans IEEE Trans on communications, vol. 36, n°1, janvier 1988, pp. 21-31,

- "Direct-sequence spread spectrum with DPSK modulation and diversity for indoor wireless communications", par M.K. VAVEHRAD et al., publié dans IEEE Trans on communications, vol. COM-35, n°2, février 1987, pp. 224-236.

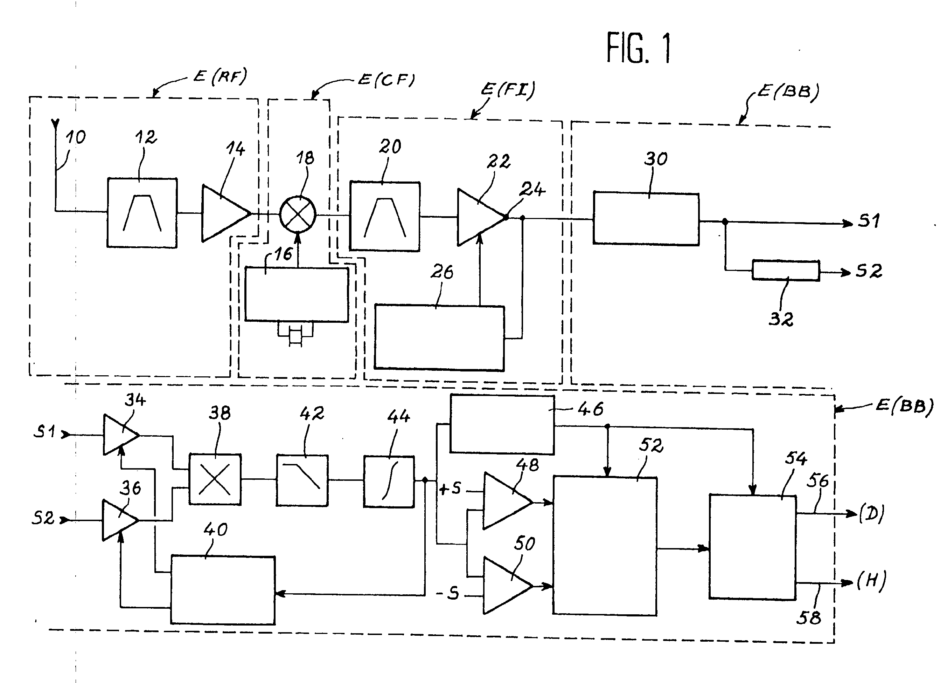

La figure 1 annexée illustre un récepteur connu apte à traiter les signaux à étalement de spectre par séquence directe. Ce récepteur comprend d'abord un étage radiofréquence, référencé E(RF), un étage de changement de fréquence E(CF), un étage à fréquence intermédiaire E(FI) et enfin un étage de restitution de la bande de base E(BB).

L'étage radiofréquence E(RF) comprend une antenne de réception 10, un filtre 12 dont la bande est égale ou supérieure à $B_{ES}$ et un amplificateur 14. L'étage de changement de fréquence E(CF) comprend un oscillateur local 16 fournissant une fréquence $F_{OL}$ et un mélangeur 18. Ce dernier délivre un signal à fréquence intermédiaire FI résultat du mélange de la fréquence incidente et de la fréquence de l'oscillateur local 16.

L'étage à fréquence intermédiaire E(FI) comprend un filtre 20 dont la bande est toujours égale ou supérieure à $B_{ES}$ et un amplificateur 22 dont la sortie 24 est reliée à un circuit de contrôle de gain 26, destiné à ajuster automatiquement le gain de l'amplificateur 22 de manière à ce que la puissance du signal à fréquence intermédiaire à la sortie 24 soit constante.

L'étage de restitution de la bande de base E (BB) comprend un corrélateur 30, qui délivre sur sa sortie un signal S1 résultat de la corrélation entre le signal reçu et la séquence d'étalement utilisée à l'émission. Cet étage comprend une ligne à retard 32, laquelle délivre un signal S2 identique à S1 mais décalé d'une durée égale à la période des éléments d'information à transmettre. Les deux signaux S1 et S2 sont ensuite appliqués à deux amplificateurs 34 et 36. Un circuit de contrôle de gain 40 règle le gain des amplificateurs 34 et 36. La modulation utilisée étant une modulation différentielle de phase, l'information est portée par la différence de phase entre les signaux S1 et S2. L'extraction de cette information s'effectue à l'aide du multiplieur 38. Si le signal en sortie de ce circuit est positif, S1 et S2 sont en phase. S'il est négatif, ils sont en opposition de phase.

L'étage en bande de base comprend en outre un filtre passe-bas 42, dont le rôle est de rejeter les harmoniques du mélange, et un intégrateur 44. Le rôle de cet intégrateur est primordial dans le cas d'une propagation par trajets multiples. Dans ce cas, à chaque trajet correspond un pic de corrélation en S1 et S2 et, donc, chaque trajet apporte de l'information. L'intégrateur 44 somme toutes les informations véhiculées par ces trajets. Il réalise donc l'opération de traitement de la diversité par trajets.

Les signaux en sortie de l'intégrateur 44 sont ensuite adressés à un circuit 46 pour la récupération de l'horloge et à deux comparateurs 48 et 50. Un circuit 52 de récupération des données délivre finalement les données D. On peut trouver enfin, comme dans la plupart des récepteurs de transmission de données, un module de détection et correction des erreurs de transmission 54.

Le circuit délivre finalement sur une sortie 56 les données (D) et sur une autre sortie 58 les impulsions d'horloge (H).

Un tel circuit récepteur est décrit dans le brevet français FR-A-2 696 298.

Bien que donnant satisfaction à certains égards, ce genre de récepteur présente des inconvénients. En effet, l'antenne de réception capte, outre le signal utile, des parasites ou émissions de brouillage dont tout ou partie du spectre se trouve compris dans la bande passante des amplificateurs des étages de radiofréquence et de fréquence intermédiaire.

Ces perturbations peuvent avoir plusieurs effets néfastes sur le fonctionnement du récepteur :

- saturation des étages amplificateurs,
- amplification insuffisante du signal par dysfonctionnement des circuits de contrôle automatique de gain,
- bruit additif en sortie du corrélateur.

Dans l'étage de restitution de la bande de base, l'opération de multiplication et d'intégration en sortie du corrélateur réalise une pseudo-démodulation du bruit additif ainsi créé. Cela conduit, selon les perturbations, à des erreurs sur le signal binaire restitué.

Le but de la présente invention est justement de remédier à ces inconvénients.

**Exposé de l'invention**

A cette fin, l'invention propose de modifier l'étage classique à fréquence intermédiaire E(FI) pour réaliser un étage composé de plusieurs voies, chacune des voies étant chargée de traiter une partie du spectre. Un étage sommateur collecte les signaux élaborés par chacune des voies pour recomposer le signal avec son spectre normal.

Chacune des voies possède, par conséquent, un filtre de bande suivi d'au moins un amplificateur à gain ajustable et des moyens de contrôle automatique du gain. Si P est la puissance délivrée par l'étage à fréquence intermédiaire classique, chacune des N voies i du dispositif proposé fournira, en première approximation, une puissance $p_i$ telle que

$$\sum_{i=1}^{i=N} p_i = P.$$

Par ce moyen, on apporte une amélioration sensible au rapport signal utile sur perturbations et, par conséquent, une diminution notable du taux d'erreurs de transmission due aux parasites et brouillages.

On observera que le principe de l'utilisation d'un filtre de bande associé à un amplificateur à contrôle automatique de gain est déjà utilisé dans différents domaines de l'électronique.

Des dispositifs existent également, utilisant le principe du partage d'un signal sur plusieurs voies, à l'aide de filtres de bandes, avec ensuite un réglage manuel indépendant du niveau de chaque voie. On peut constituer, de cette façon, des analyseurs multi-canaux par exemple. On trouve également des montages où les signaux de sortie de chaque voie sont ensuite sommés pour reconstituer un signal unique comme par exemple dans équaliseur hi-fi.

Dans la présente invention, on asservit simultanément, de façon dynamique et automatique, par contrôle automatique du gain CAG, les puissances pi des signaux de plusieurs bandes i du spectre selon une loi de répartition f(i) des puissances prédéterminées, les bandes étant séparées à l'aide de N filtres de bande, pour ensuite reconstituer un signal unique de puissance

$$P = \sum_{i=1}^{i=N} p_i.$$

On observera encore que l'invention s'inscrit dans le cadre particulier de l'étalement de spectre par séquence directe, de sorte que si l'une des bandes contient une perturbation importante et, voit donc la puissance de son signal utile associé diminuer, l'information ne sera pas pour autant perdue car cette information est répartie sur tout le spectre, en raison même de l'étalement.

De façon précise, l'invention a donc pour objet un récepteur différentiel de signaux à étalement de spectre par séquence direct, comprenant :

- un étage radiofréquence, avec des moyens de réception et d'amplification,
- un étage de changement de fréquence avec des moyens pour passer de la radiofréquence à une fréquence intermédiaire,
- un étage à fréquence intermédiaire avec des moyens de filtrage et d'amplification,
- un étage en bande de base avec des moyens de corrélation, de démodulation différentielle, d'intégration et de restitution des données,

ce récepteur étant caractérisé par le fait que l'étage à fréquence intermédiaire comprend :

- un circuit de répartition du signal de sortie de l'étage de changement de fréquence en une pluralité de N signaux identiques,
- une pluralité de N voies disposées en parallèle, chaque voie ayant une entrée reliée au circuit de répartition, chaque voie comprenant unfiltre passe-bande avec une bande spécifique occupant une partie du spectre du signal à fréquence intermédiaire, la totalité des N bandes des N filtres reconstituant le spectre du signal en fréquence intermédiaire, chaque voie comprenant encore, après le filtre, au moins un amplificateur à gain ajustable, des moyens pour ajuster le gain du ou des amplificateurs pour que la puissance amplifiée pi de la voie i réponde à une loi de répartition de puissance prédéterminée,
- un circuit de sommation à N entrées, chacune reliée à la sortie d'une des voies, et à une sortie constituant la sortie de l'étage à fréquence intermédiaire.

Dans un mode de réalisation particulier, la loi de répartition f(i) est une loi d'équipartition, les puissances pi étant toutes les mêmes et égales à P/N.

**Brève description des dessins**

- la figure 1, déjà décrite, illustre le schéma synoptique d'un récepteur connu ;
- la figure 2 montre la structure d'un étage à fréquence intermédiaire connu ;
- les figures 3A et 3B montrent le signal d'entrée et le signal de sortie pour le circuit précédent ;
- la figure 4 montre un étage multivoie à fréquence intermédiaire selon l'invention ;
- la figure 5 montre différents signaux, à savoir le signal d'entrée global (A), les signaux dans chacune des bandes de filtrage (B, C, D), les signaux de sortie de chacune des voies (E, F, G) et le signal de sortie reconstitué (H) ;
- la figure 6 montre un exemple de réalisation d'une voie selon l'invention.

**Exposé détaillé de modes de réalisation**

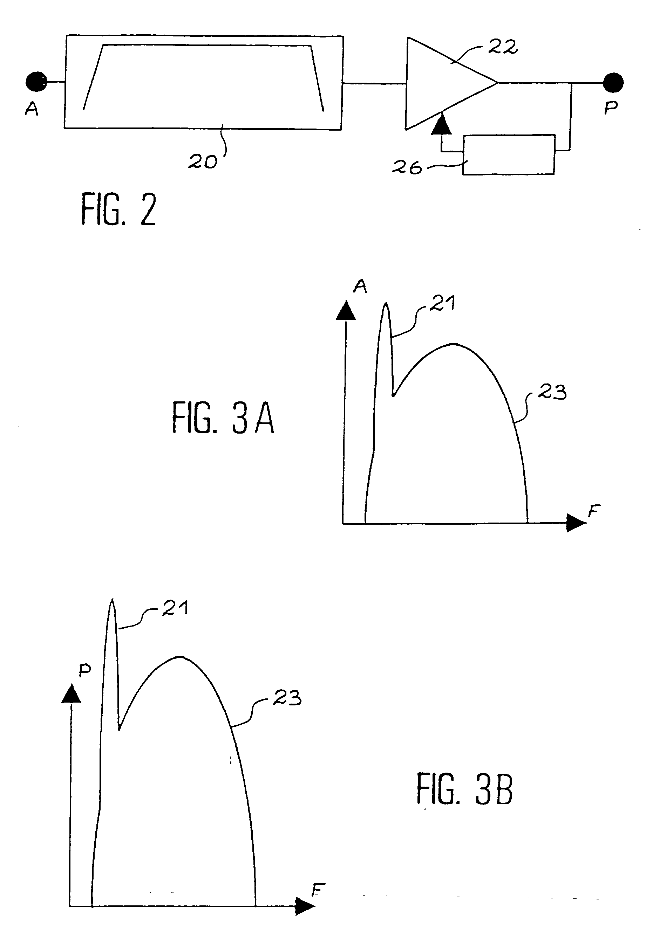

La figure 2 montre le montage classique d'un étage en fréquence intermédiaire avec un filtre passe-bande 20, un amplificateur à gain ajustable 22 et un moyen de contrôle automatique du gain 26.

La bande de filtrage du filtre 20 correspond à la largeur du spectre du signal utile. Le filtre 20 supprime les perturbations situées à l'extérieur de ce spectre. Le gain de l'amplificateur est fixé par la puissance P de l'ensemble du signal de sortie du filtre. Le signal utile et une perturbation éventuelle contenue à l'intérieur de la bande passante du filtre sont amplifiés de la même manière.

Les figures 3A et 3B montrent l'allure des spectres des signaux d'entrée A et de sortie P du montage classique, en présence d'une perturbation 21 dans le spectre du signal d'entrée. La perturbation 21 se retrouve en sortie dans la même proportion, par rapport au signal utile 23, qu'en entrée.

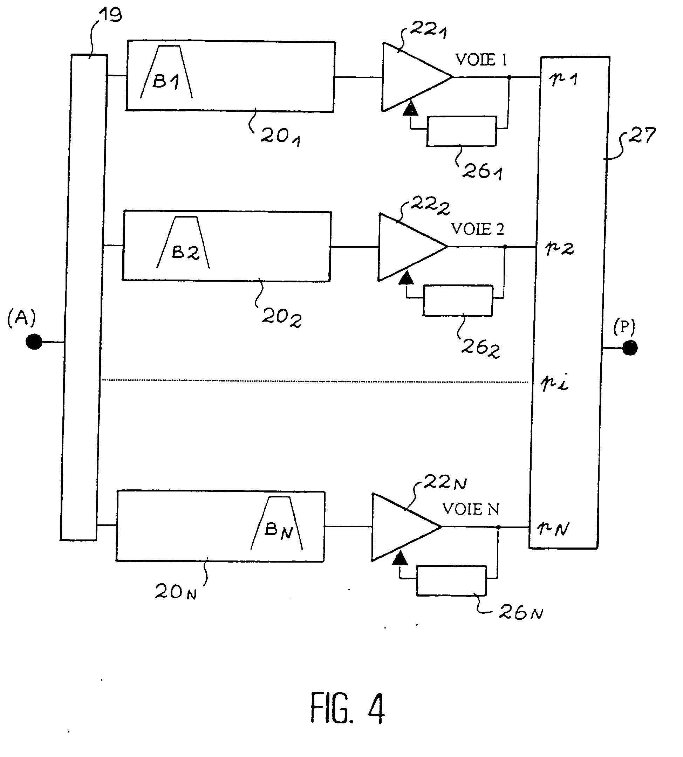

La figure 4 montre la structure de l'étage à fréquence intermédiaire selon l'invention. Cet étage comprend tout d'abord un circuit de répartition 19 à une entrée A et N sorties. Cet étage comprend ensuite N voies, avec chacune un filtre passe-bande, respectivement $20_1$, $20_2$, ..., $20_N$, un amplificateur à gain ajustable, respectivemnt $22_1$, $22_2$, ..., $22_N$, des moyens de détection du niveau de puissance délivrée, respectivement $26_1$, $26_2$, ..., $26_N$, ces moyens étant capables d'ajuster le gain des amplificateurs pour que la puissance délivrée par chacune des voies soit égale à $p_i$. Le circuit comprend encore un sommateur 27 à N entrées reliées aux N voies et à une sortie délivrant la puissance totale P. Les moyens $26_1$, $26_2$, ... peuvent comprendre une consige pour fixer la puissance pi associée à la voie i avec la consigne et un moyen de commande du gain. Dans un mode particulier de réalisation, les consignes peuvent être les mêmes.

Les bandes des filtres $20_1$, $20_2$, ..., $20_N$ sont représentées symboliquement dans chaque filtre sous les références $B_1$, $B_2$, ..., $B_N$. On voit qu'elles sont décalées les unes par rapport aux autres. Ensemble, elles reconstituent la bande totale du spectre du signal à fréquence intermédiaire.

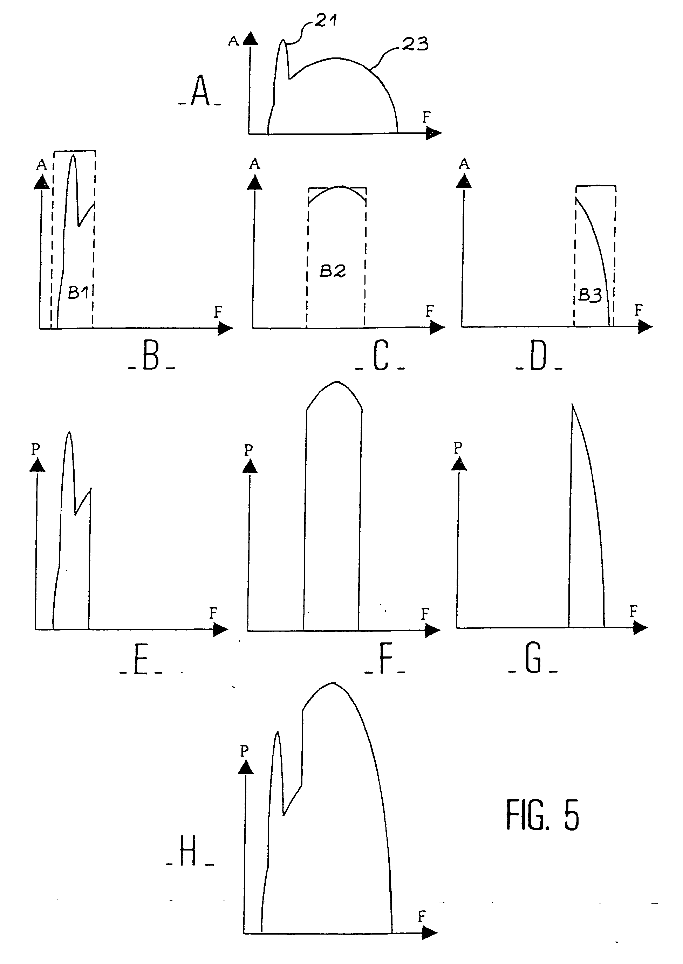

La figure 5 illustre les formes et amplitudes des différents signaux et est à comparer avec les figures 3A et 3B relative à l'art antérieur. La figure 5 correspond au cas particulier où l'étage ne comprend que trois voies. La partie A de la figure montre le signal d'entrée avec une perturbation 21 et un signal utile 23. Les parties B, C et D montrent le signal dans les trois bandes $B_1$, $B_2$, $B_3$ à l'entrée des voies. Les parties E, F et G montrent les signaux en sortie des trois voies. Enfin, la partie H montre le signal reconstitué à la sortie du sommateur.

L'avantage du récepteur de l'invention apparaît clairement sur le signal de sortie où la proportion de la perturbation par rapport au signal utile est réduite. Ceci est réalisé par la première voie traitant la partie du spectre où est présente la perturbation. La perturbation est détectée par le circuit de détection de niveau de cette voie ; celui-ci réagit alors en diminuant le gain de l'amplificateur associé. On a donc, en sortie de cette voie, un signal de puissance globale équivalente à chacun des signaux des deux autres voies. Après sommation des trois voies, on obtient donc un poids de deux pour les parties du spectre non perturbées et un poids de un pour la partie perturbée. Le rapport signal utile sur perturbations se trouve augmenté, ce qui assure un meilleur fonctionnement des étages suivants.

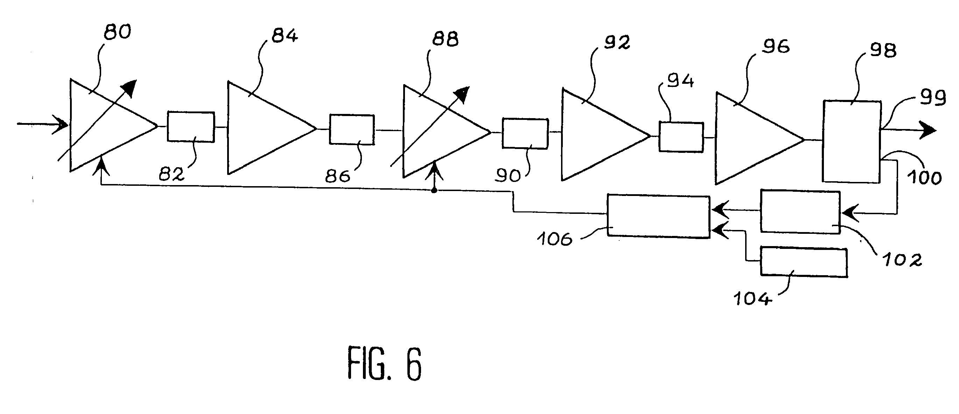

La figure 6 illustre un mode particulier de réalisation d'une voie selon l'invention. Cette voie comprend un amplificateur à gain ajustable 80, une cellule de filtrage 82, un amplificateur à gain fixe 84, une autre cellule de filtrage 86, un autre amplificateur à gain ajustable 88, encore une autre cellule de filtrage 90, un autre amplificateur à gain fixe 92, encore un autre amplificateur à gain fixe 96, un séparateur 98 à une entrée et deux sorties, l'une 99, reliée à la sortie de la voie et l'autre, 100, reliée à un circuit 102 de détection de niveau, un circuit de référence 104, un comparateur 106, lequel commande le gain des amplificateurs 80 et 88. L'entrée de cette voie est reliée à une sortie du circuit séparateur et la sortie de la voie à l'entrée du sommateur.

L'amplificateur à gain fixe 84 peut présenter un gain de 12 dB et les autres amplificateurs à gain fixe 92 et 96 des gains de 22 dB.

Les amplificateurs à gain ajustable 80 et 88 peuvent avoir un gain variant entre -15 et 12 dB.

Les amplificateurs peuvent être des circuits intégrés $\mu$PC 2711 de NEC. Le sommateur peut être un circuit Mini Circuit PSC 3-1W. Le comparateur peut être un circuit LM 324. Les cellules de filtrage peuvent être réalisées par des inductances et des condensateurs.

Le demandeur a réalisé un récepteur du type décrit avec un signal de débit 256 kbits/s étalé avec des séquences de 255 éléments ("chips"). La fréquence de l'onde porteuse était de 2450 MHz. La fréquence intermédiaire était de 261,12 MHz.

Pour tester les performances d'un récepteur conforme à l'invention par rapport à un récepteur classique, on peut procéder comme suit. On introduit des perturbations au niveau de l'entrée des étages en fréquence intermédiaire, ce qui est équivalent à une introduction au niveau du signal radiofréquence. Par exemple, on perturbe le signal en fréquence intermédiaire par addition d'un signal perturbant consistant en un signal modulé en fréquence (porteuse prenant successivement les valeurs 220 MHz, 260 MHz et 300 MHz, profondeur de modulation 500 kHz, fréquence de modulation 20 kHz). On note P le niveau du signal perturbant maximum admissible par un récepteur classique au moment de l'apparition d'erreurs de restitution. Pour un récepteur conforme à l'invention, on constate que les premières erreurs apparaissent pour un signal perturbant de niveau P+12 dB avec une porteuse à 260 MHz, P+35 dB avec une porteuse à 300 MHz et P+38 dB avec une porteuse à 220 MHz.

**Revendications**

**1.** Récepteur différentiel de signaux à étalement de spectre par séquence directe, comprenant :

- un étage radiofréquence (E(RF)), avec des moyens de réception (10) et d'amplification (14),
- un étage de changement de fréquence (E(CF)) avec des moyens (16, 18) pour passer de la radiofréquence (RF) à une fréquence intermédiaire (FI),
- un étage à fréquence intermédiaire (E(FI)) avec des moyens de filtrage et d'amplification,
- un étage en bande de base (E(BB)) avec des moyens de corrélation (30), de démodulation différentielle (34, 36, 38, 40, 42), d'intégration (44), de restitution des données (46, 48, 50, 52, 54),

ce récepteur étant **caractérisé par le fait que** l'étage à fréquence intermédiaire (E(FI)) comprend :

- un circuit (19) de répartition du signal de sortie de l'étage de changement de fréquence en une pluralité de N signaux identiques,
- une pluralité de N voies disposées en parallèle, chaque voie ayant une entrée reliée au circuit (19) de répartition, chaque voie comprenant un filtre passe-bande ($20_1$, $20_2$, ..., $20_N$) avec une bande spécifique ($B_1$, $B_2$, ..., $B_N$), occupant une partie du spectre du signal à fréquence intermédiaire, la totalité des N bandes des N filtres ($B_1$, $B_2$, ..., $B_N$) reconstituant le spectre du signal intermédiaire, chaque voie comprenant encore, après le filtre, au moins un amplificateur à gain ajustable ($22_1$, $22_2$, ..., $22_N$), des moyens ($26_1$, $26_2$, ..., $26_N$) pour que la puissance amplifiée ($p_i$) de la voie à répondre à une loi de répartition de puissance ($f(i)$) prédéterminée,
- un circuit de sommation (27) à N entrées, chacune reliée à la sortie d'une des voies, et à une sortie constituant la sortie de l'étage à fréquence intermédiaire.

**2.** Récepteur selon la revendication 1, **caractérisé par le fait que** les moyens ($26_1$, $26_2$, .., $26_N$) pour ajuster les gains des amplificateurs ($22_1$, $22_2$, ..., $22_N$) sont constitués chacun par un circuit de détection de niveau (102), un circuit délivrant un signal de consigne (104), un comparateur (106) relié au circuit de détection de niveau (102) et au circuit de consigne (104), le circuit de comparaison agissant sur le gain de l'amplificateur (80, 88).

**3.** Récepteur selon la revendication 2, **caractérisé par le fait que** les moyens ($26_1$, $26_2$,..., $26_N$) pour ajuster les gains des amplificateurs ($22_1$, $22_2$, ..., $22_N$) sont aptes à répartir la puissance de manière égale entre toutes les voies.

**Claims**

**1.** A differential receiver for direct sequence spread spectrum signals comprising:

- a radio frequency stage (E(RF)) with reception (10) and amplification (14) means,

- a frequency change stage (E(CF)) with means (16, 18) for passing from the radiofrequency (RF) to an intermediate frequency (FI),
- an intermediate frequency stage (E(FI)) with filtering and amplifying means,
- a base band stage (E(BB)) with correlation (30), differential demodulation (34, 36, 38, 40, 42), integration (44) and data restoration (46, 48, 50, 52, 54) means,

wherein said receiver is **characterised in that** the intermediate frequency stage (E(FI)) comprises:

- a circuit (19) for dividing the output signal of the frequency change stage into a plurality of N identical signals,
- a plurality of N channels arranged in parallel, each channel having an input connected to the dividing circuit (19), each channel having a band pass filter ($20_1$, $20_2$, ..., $20_N$) with a specific band ($B_1$, $B_2$, ..., $B_N$), occupying part of the spectrum of the intermediate frequency signal, all the N bands of the N filters ($B_1$, $B_2$, ..., $B_N$) reconstituting the spectrum of the intermediate signal, each channel also having, following the filter, at least one adjustable gain amplifier ($22_1$, $22_2$, ..., $22_N$), means ($26_1$, $26_2$, ... , $26_N$) so that the amplified power ($p_i$) of the channel complies with a predetermined power distribution law (f(i)),
- an adding circuit (27) having N inputs, each being connected to the output of one of the channels and to an output constituting the output of the intermediate frequency stage.

2. Receiver according to claim 1, **characterised in that** the means ($26_1$, $26_2$, ..., $26_N$) for adjusting the gains of the amplifiers ($22_1$, $22_2$, ..., $22_N$) are each constituted by a level detection circuit (102), a circuit delivering a reference signal (104), a comparator (106) connected to the level detection circuit (102) and to the reference circuit (104), wherein the comparator circuit adjusts the gain of the amplifier (80, 88).

3. Receiver according to claim 2, **characterised in that** the means ($26_1$, $26_2$, ..., $26_N$) for adjusting the gains of the amplifiers ($22_1$, $22_2$, ..., $22_N$) are able to equally distribute the power between all the channels.

**Patentansprüche**

1. Differentialempfänger für Signale mit Spektrumspreizung mittels Direktsequenz, aufweisend:

- eine Hochfrequenzstufe (E(RF)) mit Empfangsmitteln (10) und Verstärkermitteln (14),

- eine Frequenz-Änderungsstufe (E(CF)) mit Mitteln (16, 18) um von der Hochfrequenz (RF) zu einer Zwischenfrequenz (FI) zu gelangen,
- eine Zwischenfrequenzstufe (E(FI)) mit Filtermitteln und Verstärkermitteln,
- eine Basisbandstufe (E(BB)) mit Mitteln zur Korrelation (30), zur differentiellen Demodulation (34, 36, 38, 40, 42), Integration (44) und Wiedergabe der Daten (46, 48, 50, 52, 54),

wobei dieser Empfänger **dadurch gekennzeichnet ist, dass** die Zwischenfrequenzstufe (E(FI)) aufweist:

- eine Schaltung (19) zur Aufteilung des Ausgangssignals der Frequenz-Änderungsstufe in eine Vielzahl von N identischen Signalen,
- eine Vielzahl von N parallel angeordneten Wegen, wobei jeder Weg einen Eingang aufweist, der mit der Aufteilungsschaltung (19) gekoppelt ist, jeder Weg einen Bandpass-Filter ($20_1$, $20_2$, ..., $20_N$) mit einem spezifischen Band ($B_1$, $B_2$, ..., $B_N$) aufweist, einen Teil des Spektrums des Zwischenfrequenzsignals besetzend, wobei die Gesamtheit der N Bänder der N Filter ($B_1$, $B_2$, ..., $B_N$) das Spektrum des Zwischensignals wiederherstellt, wobei jeder Weg ferner nach dem Filter mindestens einen Verstärker mit einstellbarer Verstärkung ($22_1$, $22_2$, ..., $22_N$), und Mittel ($26_1$, $26_2$, ..., $26_N$) aufweist, damit die verstärkte Leistung ($p_i$) des Wegs einem vorbestimmten Gesetz der Leistungsverteilung (f(i)) entspricht,
- eine Summierungsschaltung (27) mit N Eingängen, wobei jeder Eingang mit dem Ausgang eines der Wege und mit einem den Ausgang der Zwischenfrequenzstufe bildenden Ausgang gekoppelt ist.

2. Empfänger nach Anspruch 1, **dadurch gekennzeichnet, dass** die Mittel ($26_1$, $26_2$, ..., $26_N$) zur Anpassung der Verstärkungen der Verstärker ($22_1$, $22_2$, ..., $22_N$) jeweils von einer Schaltung zur Stufendetektion (102), einer ein Anweisungssignal ausgebenden Schaltung (104) und einem mit der Schaltung zur Stufendetektion (102) und der Anweisungsschaltung (104) gekoppelten Vergleicher (106) gebildet sind, wobei die Vergleichsschaltung auf die Verstärkung des Verstärkers (80, 88) wirkt.

3. Empfänger nach Anspruch 2, **dadurch gekennzeichnet, dass** die Mittel ($26_1$, $26_2$, ..., $26_N$) zur Anpassung der Verstärkungen der Verstärker ($22_1$, $22_2$, ..., $22_N$) fähig sind, die Leistung zwischen allen Wegen auf gleiche Weise zu verteilen.

FIG. 1

EP 0 778 678 B1

FIG. 2

FIG. 3 A

FIG. 3B

FIG. 4

FIG. 5

FIG. 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2696298 A

**Littérature non-brevet citée dans la description**

- **MARVIN K. SIMON et al.** Spread Spectrum Communications. Computer Science Press, 1983, I
- **M. KAVEHRAD et al.** Design and experimental results for a direct-sequence spread-spectrum radio using differential phase shift keying modulation for indoor wireless communications. *IEEE Journal on SAC,* Juin 1987, vol. SAC 5 (5), 815-823
- **F.D. GARBER et al.** Performance of differentially coherent digital communications over frequency-selective fading channels. *IEEE Trans on communications,* Janvier 1988, vol. 36 (1), 21-31
- **M.K. VAVEHRAD et al.** Direct-sequence spread spectrum with DPSK modulation and diversity for indoor wireless communications. *IEEE Trans on communications,* Février 1987, vol. COM-35 (2), 224-236